**Europäisches Patentamt**

**European Patent Office**

**Office européen des brevets**

(19)

(11) Publication number : **0 385 991 B1**

# (12) EUROPEAN PATENT SPECIFICATION

(45) Date of publication of patent specification :
**20.05.92 Bulletin 92/21**

(51) Int. Cl.⁵ : **C01G 49/02,** C01G 49/06, C01G 49/08

(21) Application number : **88904903.7**

(22) Date of filing : **09.06.88**

(86) International application number :
**PCT/BR88/00008**

(87) International publication number :
**WO 89/04292 18.05.89 Gazette 89/11**

(54) **PROCESS FOR THE PRODUCTION OF IRON OXIDE HAVING HIGH REACTIVITY AND HIGH SPECIFIC SURFACE.**

(30) Priority : **09.11.87 BR 8706002**

(43) Date of publication of application :
**12.09.90 Bulletin 90/37**

(45) Publication of the grant of the patent :
**20.05.92 Bulletin 92/21**

(84) Designated Contracting States :
**AT BE CH DE FR GB IT LI LU NL SE**

(56) References cited :
**GB-A- 979 979**
**GB-A- 989 548**
**GB-A- 1 471 607**
**GB-A- 2 050 329**

(56) References cited :
**GB-A- 2 050 331**
**GB-A- 2 147 284**
**GB-A- 2 170 188**
**US-A- 2 870 003**

(73) Proprietor : **COMPANHIA VALE DO RIO DOCE**
**Av. Graca Aranha No. 26 13 andar**
**20005-Rio de Janeiro, RJ (BR)**

(72) Inventor : **JARDIM PAIXAO, José, Márcio**
**Rua Costa Pinto No. 170 Vila Paris**
**30000-Belo Horizonte, MG (BR)**

(74) Representative : **Patentanwälte Deufel, Hertel, Lewald**
**Isartorplatz 6 Postfach 26 02 47**
**W-8000 München 26 (DE)**

## Description

The present invention refers to a process for the production of iron oxide having high reactivity and high specific surface, from natural and/or synthetic iron oxides having low reactivity and low specific surface.

The iron oxide having high reactivity and high specific surface obtained by the process of the present invention is specially adequate to be utilized as an $H_2S$ absorber (hydrosulphuric gas), found in drilling muds of oil and natural gas wells.

During the drilling operations of oil or gas wells, emanations of $H_2S$ occurs very frequently. This gas, acts upon the equipment employed during the drilling process, causing serious problems of corrosion and, due to its toxicity, serious problems to the health of the workers who work in the well drilling zones. Due to these reasons, the removal and elimination of this gas are very important.

At present, a few natural or synthetic products have been employed in the elimination of $H_2S$; however, some of them do not eliminate the gas efficiently while others that reach higher efficiency levels have a high production cost that render them economically unfeasible for such a utilization.

Recently, an imported synthetic product has been employed as an $H_2S$ absorber. It is denominated Ironite Sponge, and it is described in the patent documents GB 1,471,607, of 28/06/74 and BR 7701035 of 17/02/77. These documents describe an iron oxide and a process for the elimination of hydrogen sulphide ($H_2S$) from drilling mud oil and gas wells, employing the referred iron oxide which is porous (Ironite sponge) and prepared by iron oxidation, for example, iron filings, containing carbon, at a temperature in the range of 204°C to 232°C, in such a way as to form $Fe_3O_4$ with spongy porosity. Following this, $Fe_3O_4$ formed is submitted to deagglomeration by crushing, to neutralization with hydroxide or ammonium solution, to mechanical agitation, with subsequent separation and removal of the non-reacted fraction, removal of the excess water and drying at 204°C. The iron oxide thus obtained presents a surface area of up to 16 times more than that of the magnetic one.

The process of preparation of ironite sponge mentioned above employs as raw-material, the iron-filing and utilizes complementary steps of physical and chemical treatments, which render it economically unfeasible, due to excess of operational units involved in it. Apart from this, the iron oxide produced does not present satisfactory characteristics for a good removal of $H_2S$ from oil drilling muds.

Documents BR 8305404 of 31/09/83 and GB 2147284 of 28/09/84, describe a process for the obtention of high surface area magnetite, which consists in separating the magnetic fraction of a mixture of iron oxides with a determined particle size range, obtained by pirite roasting the referred magnetic fraction being a magnetite concentrate which is employed to absorb hydrogen sulphide ($H_2S$) evolved from oil drilling wells. This process which employs pyrite roasting and magnetic separation is technically and economically inadequate for its employment in drilling wells

One other British document GB 1435219 of 14/12/ 73 describes improvements in or relating to the production of non-magnetic iron oxide, having a relatively high specific gravity and obtained from iron ore, such as limonite and goethite having a relatively low specific gravity. The process comprises the steps of calcining said iron-containing ore under oxidizing conditions with a residence time, sufficient to maintain the ore at a temperature between 1700°F (926°C) and 220D°F (1204 °C) for at least 20 minutes; cooling the calcined ore and separating the desired iron-oxide containing material. The iron oxide thus obtained presents specific gravity of at least 4,2 and may be employed for oil drilling , as an $H_2S$ absorber. As it may be observed, the conditions of this process are oxidizing and utilizes a high temperature range that requires a higher energy consumption, despite the fact that iron oxide produced is not magnetic.

With the aim to solve the technical and economical inconveniences existent in the production of the so-called "ironite sponge", the process for the production of iron oxide having high reactivity and high specific surface was developed, object of the present invention, which utilizes natural and/or synthetic iron oxides as raw-material having low reactivity and low specific surface.

The iron oxide presents characteristics which are much superior to those presently employed as $H_2S$ absorbers, in oil or gas drilling muds. Due to its extremely low production cost, the iron oxide thus produced substitutes, with great efficiency, technically and economically, the products utilized up to now.

The present process, consists in calcining under appropriate temperature of 400 to 1000°C, natural iron oxides, hydrated or not, such as limonite ($2Fe_2O_3.3H_2O$), goethite ($Fe_2O_3.3H_2O$) and hematite ($Fe_2O_3$) or synthetic iron oxides, such as hematite, or its mixtures in any proportion and after or during calcining,reducing with a reducing gaseous composition, in such a way that oxide be preferentially reduced to $Fe_3O_4$. The gaseous composition utilized consists of CO: 15% to 40%, $CO_2$: 5% to 20%, $H_2$: 1% to 30% and $N_2$: 10% to 70%.

Having goethite as basis, with the calcining, the $Fe_2O_3.3H_2O$ turns into spongy anhydrous $Fe_2O_3$. Following this, during reduction, the $Fe_2O_3$ sponge formed previously increases its volume considerably, attaining a specific surface greater than 10 $m^2/g$. This material is highly reactive, being, therefore, an excellent $H_2S$ absorber in oil drilling muds and may also be utilized as a weighting agent.

A synthetic iron oxide having low reactivity and low specific surface which may be employed as raw material in the present process, is the hematite obtained in the HCl operations (hydrochloric acid) by pyrolysis of iron chlorides. This hematite is the solid residue of the pyrolysis and due to its characteristics and qualities, it is usually utilized in the production of ferrite or in the pigment industry. However, when submitted to reduction by the present process, this hematite turns into magnetic, with a small-sized grain, greater porosity and high specific surface.

The process is carried out by the introduction, in a rotating oven or fluid bed, of the natural and/or synthetic iron oxides, having an initial particle size smaller than 3,00mm, where they are submitted to calcination at temperatures in the range of 400 to 1000 °C, followed by reduction with a gaseous composition composed of CO: 15% to 40%, $CO_2$: 5% to 20% $H_2$: 1% to 30% and $N_2$: 10% to 70% at adequate temperatures. The calcination and reduction steps may be carried out simultaneously or in sequence. After these steps (calcination and reduction), the iron oxide produced is cooled to a temperature lower than 140°C, in a reducing or neutral atmosphere and after this comminuted to a particle size smaller than 200 mesh (0,074 mm).

Several assays have been carried out utilizing the present invention, with natural and synthetic iron oxides, which are described below by way of illustrative examples, which, however, must not be understood as limiting parameters of the invention:

## Example I

Utilized iron oxides: Hematite 50% + goethite 50%
Initial particle size: < 2,00 mm (lower than 2,00 mm)
Calcination temperature: 750°C
Calcination time: 60 minutes
Reduction temperature: 550°C
Reduction time: 60 minutes
Gaseous mixture composition for reduction:

CO  = 25%

$CO_2$  = 5%

$H_2$  = 6%

$N_2$  = 64%

Final particle size:< 200 mesh (lower than 0,070 mm)
Initial specific surface: 1000 $cm^2/g$
Final specific surface: > 100.000 $cm^2/g$ (higher than 100.000 $cm^2/g$)

## Example II

Utilized iron oxide: goethite - 100%
initial particle size : < 2,0 mm (lower than 2,0 mm)
Calcination temperature: 600°C
Calcination time: 60 minutes
Reduction temperature: 600°C
Reduction time: 60 minutes
Gaseous mixture composition for reduction:

CO  = 23%

$CO_2$  = 6%

$H_2$  = 8%

$N_2$  = 63%

Final particle size: < 200 mesh (lower than 0,074 mm)
Initial specific surface: 1200 $cm^2/g$
Final specific surface:> 250.000 $cm^2/g$ (higher than 250.000 $cm^2/g$)

## Example III

Utilized iron oxides: Goethite 50% + limonite 50%
Initial particle size: 1,0 mm (lower than 1,0 mm)
Calcination temperature: 700°C

EP 0 385 991 B1

Calcination time: 60 minutes
Reduction temperature: 550°C
Reduction time: 60 minutes
Gaseous mixture composition for reduction:

CO $= 25\%$

$CO_2 = 3\%$

$H_2 = 9\%$

Final particle size < 200 mesh (lower than 0,174 mm)

Initial specific surface: 1800 cm²/g

Final specific surface:> 400.000 cm²/g (greater than 400.000 cm²/g)

As it may be observed by the examples above, the iron oxide produced by the present example, presents a high final specific surface (> 100.000 cm²/g), which is characteristic of an excellent product to be utilized, as an $H_2S$ absorber as well as a weighting agent. With samples of iron oxides obtained by the process, the below-mentioned chemical tests were carried out, specially employed to evaluate the quality of the spongy iron oxide:

. Kinetic and Reactivity Test: it measures the drop of sulphide concentration present in the reaction medium, in 15 minute-intervals.

. Sulphide Consumption Test: it is carried out aiming at evaluating the occurrence of the sample's active centers.

. $H_2 S$ Consumption Test: it is carried out aiming at evaluating the surface area which is chemically active in the presente of $H_2S$.

It must be pointed out that in the kinetic test, a sample is approved if, in the 15 minutes interval, the drop in the initial sulphide concentration is greater than 50% and, at the end of 60 minutes of the test, the sulphide concentration is equal to zero. The table below shows the comparative result of 3 (three) samples of iron oxide obtained by the process of the invention, denominated CVRD (Companhia Vale do Rio Doce) and a sample of the product denominated "Ironite Sponge".

| SAMPLE | DROP IN THE INITIAL CONCENTRATION | | |
|---|---|---|---|
| | 15 minutes | 30 minutes | 60 minutes |
| CVRD - 1 | 100% | - | - |
| CVRD - 2 | 100% | - | - |
| CVRD - 3 | 100% | - | - |
| "Ironite Sponge" | 60% | 80% | 100% |

As it may be observed, the reactivity of the samples CVRD-1, 2 and 3 is much higher than that of the Ironite Sponge sample, and because of this, the CVRD product is much superior in quality when compared with the product of the prior art.

The sulphide consumption tests for the samples CVRD-1 and 3 presented the following results:

0, 19, 0,16 and 0, 19 g S⁻²/g of sample, respectively. These results are considered excellent, having in view that the specification of this test is that the sample presents a result equal or greater than 0, 09g S⁻²/g of sample.

The $H_2S$ consumption test establishes that the tested samples present a result greater than 0, 9g $H_2S$/g of sample. In the samples CVRD-1, 2 and 3, the result presented was 1,4, 1,6 and 1,4g $H_2S$/g of sample, respectively.

With the adoption of the present invention for the production of iron oxide having high reactivity and high specific surface, new perspectives lie ahead for the utilization of natural and synthetic iron oxides as basic raw-material for the production of a hydrogen sulphide-absorbing agent.

As the product obtained technical characteristics which are much superior to those presently existent on the market and considering that its production process permits a great cost reduction, it makes the invention competitive and with an enormous application potential.

4

EP 0 385 991 B1

## Claims

1. PROCESS FOR THE PRODUCTION OF SPONGY IRON OXIDE HAVING HIGH REACTIVITY AND HIGH SPECIFIC SURFACE, which comprises the steps of calcination, reduction and cooling, characterized and/or synthetic iron oxides, with a particle size smaller than, 3,0 mm, at temperatures in the range of 400 to 1000°C, reduction of the referred calcined oxide with a gaseous composition composed of 15 to 40% of CO (carbon monoxide), 5 to 20% of $CO_2$ (carbon dioxide), 1 to 30% of $H_2$ (hydrogen) and 10 to 70% of $N_2$ (nitrogen), followed by cooling, in reducing or neutral atmosphere, to temperatures lower than 140°C.

2. PROCESS, according to claim 1, characterized by the fact that natural and/or synthetic oxides like limonite ($2Fe_2O_3.3H_2O$); or goethite ($Fe_2O_3.3H_2O$) or hematite ($Fe_2O_3$) or any of its mixtures are in variable proportions.

3. PROCESS, according to claim 1, characterized by the fact that the steps of calcination and reduction are carried out simultaneosly or in sequence.

4. PROCESS, according to claim 1, characterized by the fact that the spongy iron oxide obtained has a specific surface superior to 100.000 $cm^2/g$.

5. PROCESS, according to claim 1, characterized by the fact that the spongy iron oxide obtained is submitted to comminution to a particle size smaller than 200 mesh (0,074 mm).

## Patentansprüche

1. Verfahren zur Herstellung von schwammigem Eisenoxid mit hoher Reaktivität und hoher spezifischer Oberfläche, welches die Stufen der Calcinierung, der Reduktion und des Kühlens umfaßt, dadurch gekennzeichnet, es die Calcinierung von natürlichen und/oder synthetischen Eisenoxiden mit einer Teilchengröße von weniger als 3,0 mm bei Temperaturen im Bereich von 400 bis 1000°C und die Reduktion des genannten calcinierten Eisenoxids mit einer gasförmigen Zusammensetzung aus 15 bis 40% CO (Kohlenmonoxid), 5 bis 20% $CO_2$ (Kohlendioxid), 1 bis 30% $H_2$ (Wasserstoff) und 10 bis 70% $N_2$ (Stickstoff) umfaßt, gefolgt von Kühlen in reduzierender oder neutraler Atmosphäre auf Temperaturen von weniger als 140°C.

2. Verfahren nach Anspruch 1, dadurch gekennzeichnet, daß natürliche und/oder synthetische Oxide wie Limonit ($2Fe_2O_3.3H_2O$) oder Goethit ($Fe_2O_3.3H_2O$) oder Haematit ($Fe_2O_3$) oder irgendwelche Mischungen davon in verschiedenen Mengenanteilen vorliegen.

3. Verfahren nach Anspruch 1, dadurch gekennzeichnet, daß die Stufen des Calcinierens und der Reduktion gleichzeitig oder nacheinander durchgeführt werden.

4. Verfahren nach Anspruch 1, dadurch gekennzeichnet, daß das erhaltene schwammige Eisenoxid eine spezifische Oberfläche von mehr als 100.000 $cm^2/g$ hat.

5. Verfahren nach Anspruch 1, dadurch gekennzeichnet, daß das erhaltene schwammige Eisenoxid einer Zerkleinerung auf eine Teilchengröße von weniger als 200 mesh (0,074 mm) unterzogen wird.

## Revendications

1. Procédé pour la production d'oxyde de fer spongieux ayant une réactivité élevée et une surface spécifique élevée, comprenant les étapes de grillage, de réduction et de 5 refroidissement, caractérisé en ce qu'il comprend le grillage d'oxydes de fer naturels et/ou synthétiques, avec une taille des particules inférieure à 3,0 millimètres, à des températures du domaine allant de 400°C- à 1000°C, une réduction de l'oxyde de fer grillé par un mélange gazeux composé de 15 à 40% de CO (monoxyde de carbone), de 5 à 20% de $CO_2$ (dioxyde de carbone), de 1 à 30% de $H_2$ (hydrogéne) et de 10 à 70% de $N_2$ (azote), suivie d'un refroidissement , dans une atmosphère pour réduction ou dans une atmosphère neutre, à des températures inférieures à 140°C.

2. Procédé selon la revendication 1, caractérisé en ce que les oxydes naturels et/ou synthétiques tels que la limonite ($2FeO_3,3H_2O$), la goethite ($Fe_2O_3,3H_2O$), ou l'hématite ($Fe_2O_3$) ou un de ses mélanges quelconque, ont des proportions variables.

3. Procédé selon la revendication 1, caractérisé en ce que les étapes de grillage et de réduction sont réalisées simultanément ou par séquence.

4. Procédé selon la revendication 1, caractérisé en ce que l'oxyde de fer spongieux obtenu a une surface spécifique supérieure à 100000 $cm^2/g$.

5. Procédé selon la revendication 1, caractérisé en ce que l'oxyde de fer spongieux obtenu est soumis à une pulvérisation afin d'obtenir une taille des particules inférieure à 0,074 millimètre.

5